# EUROPÄISCHE PATENTSCHRIFT

(11) **EP 3 068 523 B1**
(45) Veröffentlichungstag und Bekanntmachung des Hinweises auf die Patenterteilung: **07.06.2017**
(21) Anmeldenummer: 14796111.4
(22) Anmeldetag: 11.11.2014
(51) Int. Cl.: B01F 3/04, B01F 5/04, B01F 5/06, F01N 3/20, F01N 3/28

(54) **EINRICHTUNG ZUM VERMISCHEN EINES FLÜSSIGEN MEDIUMS MIT EINEM GASSTROM**
DEVICE FOR MIXING A LIQUID MEDIUM WITH A GAS STREAM
DISPOSITIF DE MÉLANGE D'UN MILIEU LIQUIDE AVEC UN COURANT GAZEUX

(30) Priorität: 15.11.2013 DE 102013223338; 21.07.2014 DE 102014214093
(43) Veröffentlichungstag der Anmeldung: 21.09.2016
(73) Patentinhaber: Robert Bosch GmbH, 70442 Stuttgart (DE)
(72) Erfinder: JARUVATEE, Chaiwat, 70176 Stuttgart (DE); OHRNBERGER, Tobias, 73529 Schwaebisch Gmuend (DE); KHANI, Kamran, 76646 Bruchsal (DE); ALT, Christian, 70469 Stuttgart (DE)
(86) Internationale Anmeldenummer: PCT/EP2014/074221
(87) Internationale Veröffentlichungsnummer: WO 2015/071234

(56) Entgegenhaltungen:
- EP-A1- 2 295 756
- EP-A1- 2 775 114
- EP-A2- 1 481 719
- WO-A2-2008/024535
- US-A1- 2009 000 287

## Beschreibung

Die Erfindung betrifft eine Einrichtung zum Vermischen eines flüssigen Mediums mit einem Gasstrom, insbesondere Abgasstroms, mit einer Gaszuführung, einem Mischzylinder, einer Einspritzeinrichtung für das flüssige Medium und einer Gemischabführung, wobei die Gaszuführung als tangential oder radial in den Mischzylinder mündendes erstes Rohrelement und die Gemischabführung als axial aus dem Zylinder führendes zweites Rohrelement ausgebildet ist.

### Stand der Technik

Einrichtungen der Eingangs genannten Art sind aus dem Stand der Technik bekannt. Zur Verdampfung und Vermischung von flüssigem Medium mit einem Gasstrom ist es bekannt, in einem Rohrstück mit bestimmter Länge einen statischen Mischer mit flügelartigen, den Fluidstrom beeinflussenden Strömungsleitelementen anzuordnen. Dabei erfolgt die Einspritzung des flüssigen Mediums zu Rohrbeginn. Die Flüssigkeitsstrahlen werden dabei direkt auf den statischen Mischer ausgerichtet, wodurch in Folge des Kontakts der Tropfen der Flüssigkeit mit dem statischen Mischer es zum Aufbruch der Tropfen in kleinere Tropfen kommt. Die kleineren Tropfen verdampfen anschließend erheblich schneller als die ursprünglich eingebrachten großen Tropfen. Stromabwärts des Mischers erfolgt durch die eingebrachten Turbulenzen und Strömungsumverteilungen eine Vermischung des Mediums mit dem Gasstrom. Ein derartiges Prinzip wird beispielsweise auch zur Reduzierung von Stickoxid-Emissionen der Abgase einer Brennkraftmaschine durch eine selektive katalytische Reduktion (SCR) genutzt.

Aus der EP 2 465 602 B1 ist es außerdem bekannt, einen Mischzylinder vorzusehen, in welchem zur besseren Gemischaufbereitung ein Gasstrom tangential eingeleitet wird, so dass sich in dem Mischzylinder eine Drallströmung ergibt. Eine Gemischabführung ist axial an den Zylinder angeordnet, so dass die Drallströmung den Mischzylinder axial verlässt. Auf der der Gemischabführung gegenüberliegenden Stirnseite eines Mischzylinders ist die Einspritzeinrichtung angeordnet, welche das flüssige Medium axial in den Mischzylinder einbringt. Dadurch ergibt sich eine rotierende Randströmung und eine im Wesentlichen axial fließende Mittenströmung, die stromabwärts des Mischzylinders wieder miteinander vermengt werden.

Aus den Offenlegungsschriften EP 1 481 719 A2, die eine Einrichtung gemäß dem Oberbegriff des Anspruchs 1 offenbart, WO 2008/024535 A2, US 2009/0000287 A1 und EP 2 295 756 A1 sind bereits Einrichtungen zum Vermischen eines flüssigen Mediums mit einem Gasstrom bekannt, bei welchen in einem Mischzylinder ein Luftleitelement angeordnet ist. Insbesondere WO 2008/024535 A2 zeigt eine Einrichtung der gattungsgemäßen Art, bei welcher das Luftleitelement spiralförmig verläuft.

### Offenbarung der Erfindung

Die erfindungsgemäße Einrichtung mit den Merkmalen des Anspruchs 1 hat den Vorteil, dass die Vermischung und Verdampfung innerhalb des Mischzylinders auf nur kurzer axialer Länge optimal erfolgt. Erfindungsgemäß ist hierzu vorgesehen, dass die Einspritzeinrichtung derart angeordnet und/oder ausgebildet ist, dass das flüssige Medium radial oder tangential dem Mischzylinder zugeführt wird. Dadurch wird das eingespritzte Medium in die in dem Mischzylinder erzeugte Drallrichtung eingeleitet, wodurch eine bessere Vermischung des Mediums mit dem Gasstrom erfolgt, auch weil das flüssige Medium an einer Mantelwand des Mischzylinder trifft, wodurch größere Tropfen in kleinere Tropfen zerplatzen. Die Einspritzeinrichtung ist dabei bevorzugt der Mantelwand des Mischzylinders entsprechend zugeordnet. Vorzugsweise ist die Einspritzeinrichtung dabei nahe zu der Gaszuführung angeordnet. Alternativ ist gemäß einer bevorzugten Ausführungsform der Erfindung vorgesehen, dass die Einspritzeinrichtung auf der der Gaszuführung gegenüberliegenden Seite des Mischzylinders an der Mantelwand angeordnet ist. Die Einspritzeinrichtung ist dabei derart ausgebildet, dass das flüssige Medium radial oder tangential dem Mischzylinder zugeführt wird, wobei die tangentiale Zuführung den Vorteil hat, dass das Medium bereits in Drallrichtung des Gasstroms in den Mischzylinder eingeführt werden kann. Gemäß einer weiteren bevorzugten Ausführungsform der Erfindung ist vorgesehen, dass nur der letzte, dem Mischzylinder zugewandte Abschnitt der Gaszuführung tangential oder radial in dem Mischzylinder mündet. Stromaufwärts verläuft die Gaszuführung bevorzugt axial. Der Mischzylinder weist bevorzugt einen kreisförmigen, ovalen oder eckigen Querschnitt auf, so dass er eine entsprechend kreisförmige, ovale oder eckige Mischkammer bildet. Insbesondere kann vorgesehen sein, dass der Mischzylinder eine quaderförmige Mischkammer bildet.

Durch eine bevorzugte Zuordnung der Einspritzeinrichtungen zu der Gaszuführung derart, dass die Flüssigkeit in den Gasstrom vor oder bei Eintritt in den Mischzylinder gemischt wird, wobei dieses Gemisch gewollt auf eine Mantelwand des Mischzylinders trifft, wodurch ein aufgeprallter Tropfen in kleinere Tropfen zerplatzt und ein Wandfilm auf der Mantelwand gebildet wird, der anschließend verdampft, wird die Durchmischung weiter verbessert. Verbliebene kleine Tropfen folgen an der Mantelwand dem Gasstrom und verdampfen dabei nach kurzer Wegstrecke vollständig. Hierdurch wird sichergestellt, dass keine flüssige Phase den Mischzylinder beziehungsweise die Mischkammer durch die Gemischabführung verlässt, beziehungsweise dass das flüssige Medium in dem Mischzylinder vollständig verdampft und mit dem Gasstrom vermengt wird. Durch die tangentiale oder radiale Gaszuführung und die dadurch erfolgende Rotation beziehungsweise den dadurch erfolgenden Drall in dem Mischzylinder wird eine sehr homogene Vermischung des Gasstroms mit dem Medium erreicht, die beispielsweise bei der Anwendung als Abgasnachbehandlungseinrichtung zu entsprechenden Vorteilen bei einer stromabwärts erfolgenden Reaktion, beispielsweise in einem Katalysator, führt.

Gemäß einer besonders bevorzugten Ausführungsform der Erfindung ist vorgesehen, dass die Einspritzeinrichtung der Gaszuführung zugeordnet und derart ausgerichtet und/oder ausgebildet ist, dass sie das flüssige Medium in den Gasstrom vor Eintritt in den Mischzylinder einspritzt. Dadurch wird das flüssige Medium durch den Gasstrom in den Mischzylinder hinein getragen und dort unterstützt durch die Kraft des Gasstroms gegen die genannte Mantelwand geworfen, an welcher die großen Tropfen in kleinere Tropfen zerplatzen. Vorzugsweise ist vorgesehen, dass die Einspritzeinrichtung an dem Beginn des radial beziehungsweise tangential zu dem Mischzylinder ausgerichteten Rohrelementes, also stromaufwärts des Mischzylinders, an der Gaszuführung beziehungsweise an dem Rohrelement angeordnet ist, so dass das Medium in den Gasstrom in ausreichendem Abstand zu dem Mischzylinder eingespritzt wird, bevorzugt an der Stelle, an welcher die Gaszuführung von einer axialen Ausrichtung in die tangentiale beziehungsweise radiale Ausrichtung übergeht.

Besonders bevorzugt ist vorgesehen, dass die Einspritzeinrichtung derart ausgebildet und/oder angeordnet ist, dass das flüssige Medium in Richtung der in dem Mischzylinder erzeugten Drallströmung des Gasstroms eingespritzt wird, so dass ein sicherer Transport des flüssigen Mediums in den Mischzylinder hinein gewährleistet ist. Vorzugsweise ist die Einspritzeinrichtung an dem ersten Rohrelement derart angeordnet, dass ihre Einspritzrichtung zumindest im Wesentlichen in Richtung der Mittelachse des Mischzylinders weist. Bevorzugt ist die Einspritzeinrichtung dabei nahe zu dem Mischzylinder oder direkt an dem Übergang von dem Rohrelement zu dem Mischzylinder angeordnet, um ein Einspritzen des flüssigen Mediums in den rotierenden Gasstrom optimal zu gewährleisten.

Gemäß einer vorteilhaften Weiterbildung der Erfindung ist vorgesehen, dass die Gaszuführung einer ersten Stirnseite des Mischzylinders und die Mischabführung einer zweiten, der ersten Stirnseite insbesondere gegenüberliegenden Stirnseite des Mischzylinders zugeordnet ist. Hierdurch wird erreicht, dass die Gemischabführung und die Gaszuführung an unterschiedlichen axialen Enden des Mischzylinders vorgesehen sind. Wobei zu berücksichtigen ist, dass die Gaszuführung nicht stirnseitig in den Mischzylinder mündet, sondern wie erfindungsgemäß vorgesehen tangential, also bevorzugt in eine Mantelwand des Mischzylinders.

Erfindungsgemäß ist vorgesehen, dass der Gemischabführung eine Blende vorgeschaltet ist, die einen Durchmesser aufweist, der kleiner als der Durchmesser des Mischzylinders oder die Abmessungen der Mischkammer ausgebildet ist. Dadurch weist der Ausgang aus dem Mischzylinder einen geringeren Durchmesser als der Mischzylinder selbst auf, wodurch eine homogene Gasmischung der Mischzylinder durch die Blende verlässt. Die Blende ist bevorzugt durch eine zentrale Öffnung in einer der Gemischabführung zugeordneten Stirnwand des Mischzylinders ausgebildet. Alternativ ist bevorzugt vorgesehen, dass die Blende durch ein zwischen Mischzylinder und Gasabführung eingelegtes Blendenelement, wie beispielsweise ein Ringelement, insbesondere Ringblech, ausgebildet ist.

Ferner ist vorgesehen, dass in dem Mischzylinder bevorzugt wenigstens ein erstes beziehungsweise wenigstens ein weiteres Luftleitelement angeordnet ist, das zylinderwandförmig zumindest im Wesentlichen koaxial zu dem Mischzylinder angeordnet ist und sich vorzugsweise nur über einen beschränkten Umfangswinkel des Mischzylinders erstreckt. Durch Vorsehen des ersten Luftleitelementes wird vermieden, dass das flüssige Medium beziehungsweise die Tropfen des flüssigen Mediums auf eine kühle Mantelwand des Mischzylinders treffen, wodurch der Verdampfungsprozess verbessert wird. Dadurch, dass sich das erste Luftleitelement nur über einen beschränkten Umfang erstreckt, wird gewährleistet, dass das tangential in dem Mischzylinder eingebrachte Gemisch auf die Innenseite des Luftleitelementes treffen kann. Vorzugsweise ist dazu das erste Luftleitelement zumindest im Wesentlichen auf der der Gaszuführung gegenüberliegenden Seite des Mischzylinders angeordnet.

Besonders bevorzugt ist vorgesehen, dass das erste Luftleitelement radial beabstandet zu der Mantelwand des Mischzylinders angeordnet ist. Dadurch wird zwischen der Mantelwand des Mischzylinders und der Mantelwand des ersten Luftleitelements ein Spalt gebildet, durch welchen ein Teil des Gasstroms in den Mischzylinder strömt. Dadurch ist das erste Luftleitelement thermisch von der Mantelwand des Zylinders im Wesentlichen entkoppelt, so dass beispielsweise bei Vorliegen eines heißen Gasstroms das erste Luftleitelement aufgeheizt wird, wodurch der Verdampfungsprozess verbessert wird, und ein Auskühlen des Luftleitelements über die Mantelwand des Mischzylinders im Wesentlichen vermieden wird. Das Risiko zur Bildung kristalliner Ablagerungen im Inneren des Mischzylinders wird hierdurch verringert. Zweckmäßigerweise sind zwischen dem ersten Luftleitelement und der Mantelwand des Mischzylinders hierbei mehrere Abstandshalter vorgesehen, die die radiale Breite des Spalts zwischen Luftleitelement und Mantelwand des Mischzylinders definieren und das Luftleitelement an seiner Position halten.

Erfindungsgemäß ist vorgesehen, dass in dem Mischzylinder wenigstens ein beziehungsweise wenigstens ein zweites Luftleitelement angeordnet ist, das sich zumindest abschnittsweise spiralförmig erstreckt. Durch den spiralförmigen Verlauf des zweiten Luftleitelements wird das in den Mischzylinder einströmende Gas in eine vorteilhafte Drallbewegung versetzt. Zweckmäßigerweise ist der spiralförmige Verlauf derart gewählt, dass der Radius des Luftleitelements in Strömungsrichtung kleiner wird, so dass das durch das zweite Luftleitelement geführte Gas eine Geschwindigkeitszunahme erfährt. Hierdurch lässt sich die Vermischung des Gases mit dem eingespritzten Medium noch weiter optimieren. Das zweite Luftleitelement ist insbesondere alternativ oder zusätzlich zu dem ersten Luftleitelement vorgesehen.

Weiterhin ist erfindungsgemäß vorgesehen, dass sich das eine beziehungsweise das zweite Luftleitelement von einer Mantelwand des Mischzylinders zumindest abschnittsweise spiralförmig zu der Blende hin erstreckt. Dadurch wird das Gas zusammen mit dem eingespritzten Medium in Richtung der Blende geführt und aufgrund des spiralförmigen Verlaufs des zweiten Luftleitelements beschleunigt und in eine Drallbewegung versetzt. Dadurch, dass das Gasgemisch bis zu der Blende durch das zweite Luftleitelement geführt wird, erfolgt eine strömungsoptimierte Durchführung des Gasgemischs durch die Blende, wodurch insbesondere Staudrücke oder dergleichen vermieden werden. Gleichzeitig unterstützt der spiralförmige Verlauf des zweiten Luftleitelements den Tropfenaufbruch, weil durch den spiralförmigen Verlauf ein Aufprallen größerer Tröpfchen an die Innenseite des zweiten Luftleitelements zu einem Zerstäuben führt beziehungsweise das Bilden von kleineren Tröpfchen unterstützt.

Besonders bevorzugt ist vorgesehen, dass das mindestens eine erste Luftleitelement radial zwischen der Mantelwand des Mischzylinders und dem zweiten Luftleitelement liegt. Gemäß dieser Ausführungsform sind somit sowohl das erste als auch das zweite Luftleitelement vorgesehen, die zusammen in dem Mischzylinder angeordnet sind. In diesem Fall dient das erste Luftleitelement als weiteres Mischelement und auch als Aufprallelement für das eingespritzte Medium, um dessen Zerstäubung beziehungsweise die Erzeugung kleiner Tropfen zu verbessern.

Gemäß einer vorteilhaften Weiterbildung der Erfindung ist vorgesehen, dass die Einrichtung als Abgasnachbehandlungseinrichtung ausgebildet ist, wobei die Gaszufuhr als Abgasrohr für eine Brennkraftmaschine ausgebildet ist die Einspritzeinrichtung zum Einspritzen von flüssigem Abgasnachbehandlungsmittel. Durch das Abgasrohr wird das heiße Abgas der Brennkraftmaschine dem Mischzylinder tangential zugeführt, und durch die Einspritzeinrichtung das Abgasnachbehandlungsmittel wie zuvor beschrieben beigemischt. Durch die erfindungsgemäße Ausbildung ergibt sich der Vorteil, dass ein besonders homogenes Abgas-Abgasnachbehandlungsmittelgemisch stromabwärts des Mischzylinders ergibt, das zu einer optimalen Nachbehandlung des Abgases im Sinne einer Reduzierung von Schafstoffen führt.

Bevorzugt ist dazu die Gemischabführung mit einem Katalysator, insbesondere mit einem SCR-Katalysator zur selektiven katalytischen Reduktion verbunden oder verbindbar. Das Gasgemisch, das den Mischzylinder verlässt, wird dann dem Katalysator zur weiteren Nachbehandlung zugeführt.

Gemäß einer bevorzugten Ausführungsform der Erfindung ist vorgesehen, dass der Mischzylinder und/oder die Gaszufuhr und die Gemischabführung kreiszylinderförmig ausgebildet sind beziehungsweise einen kreiszylinderförmigen Querschnitt aufweisen. Bei einem kreiszylinderförmig ausgebildeten Mischzylinder ist zweckmäßigerweise auch die Blende kreiszylinderförmig ausgebildet. Hierdurch wird ein vorteilhafter Drall der Gasströmung erreicht. Gemäß einer alternativen Ausführungsform der Erfindung ist bevorzugt vorgesehen, dass der Querschnitt des Mischzylinders, der Blende, der Gaszuführung und/oder der Gemischabführung ovalförmig ausgebildet ist. Selbstverständlich sind auch andere Querschnittsformen denkbar. Der Mischzylinder ist gemäß einer weiteren Ausführungsform bevorzugt unmittelbar an einem Turbinenausgang einer Turbomaschine, insbesondere eines Abgasturboladers, angeordnet, um ein sogenanntes motornahes SCR-System zu bilden. Die Turbomaschine kann insofern einen Bestandteil der beschriebenen Einrichtung darstellen.

Im Folgenden soll die Erfindung anhand von Ausführungsbeispielen näher erläutert werden. Dazu zeigen:
- Figur 1: eine Einrichtung zum Vermischen und insbesondere Verdampfen eines flüssigen Mediums gemäß einem ersten Ausführungsbeispiel in einem Gasstrom in einer Seitenansicht,
- Figur 2: die Einrichtung in einer Draufsicht,
- Figur 3: die Einrichtung in einer vereinfachten Schnittdarstellung,
- Figur 4: die Einrichtung in einer weiteren Schnittdarstellung und
- Figur 5: ein weiteres Ausführungsbeispiel der Einrichtung.

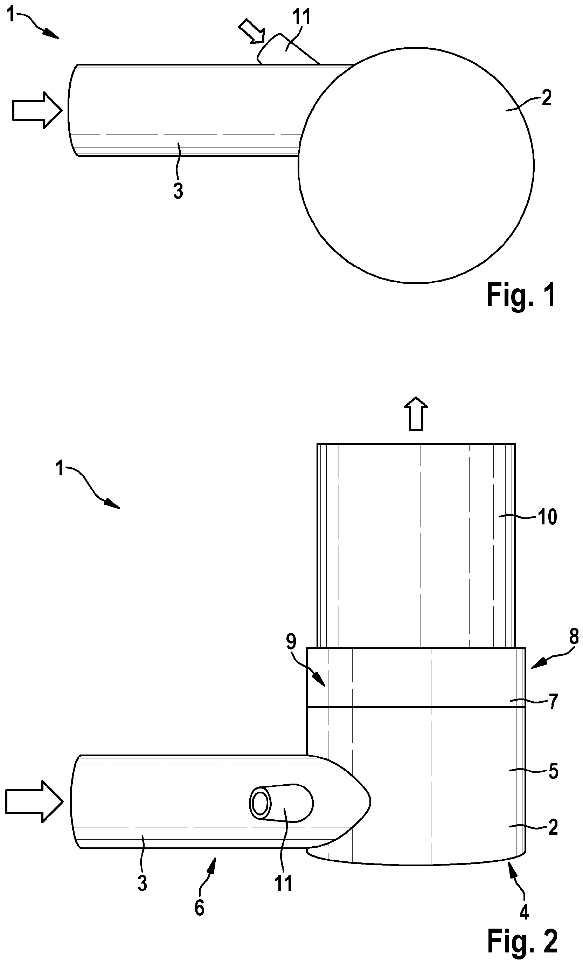

Figur 1 zeigt in einer Seitenansicht eine Einrichtung 1 zum Vermischen und Verdampfen eines flüssigen Mediums, die als Abgasnachbehandlungseinrichtung für eine Brennkraftmaschine ausgebildet ist. Die Einrichtung 1 weist einen Mischzylinder 2 auf, der einen kreiszylinderförmigen Querschnitt aufweist und damit eine kreiszylinderförmige Mischkammer bildet. An dem Mischzylinder 2 ist ein erstes Rohrelement 3 angeordnet, das tangential an dem Mischzylinder 2 angeordnet ist.

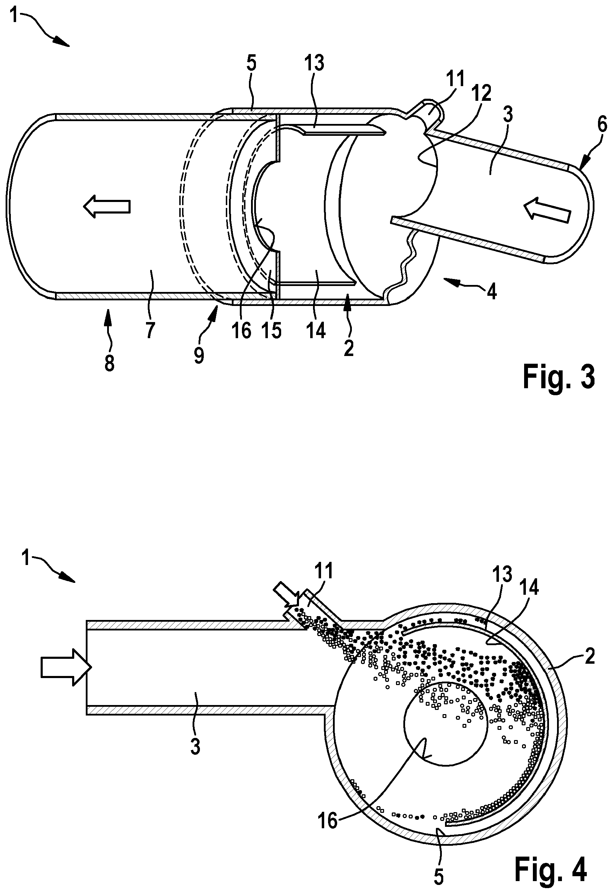

Figur 2 zeigt die Einrichtung 1 in einer Draufsicht. Das Rohrelement 3 ist dabei an einer ersten Stirnseite 4 des Mischzylinders 2 zugeordnet, wobei das Rohrelement 3 an einer Mantelwand 5 des Mischzylinders 2 angeordnet ist. An der Stelle, an welcher das Rohrelement 3 an der Mantelwand 5 befestigt beziehungsweise angeordnet ist, weist die Mantelwand 5 eine Öffnung 12 auf, wie beispielsweise aus Figur 3 ersichtlich, durch welche ein durch das Rohrelement 3 geführter Gasstrom in den Mischzylinder 2 eintreten kann. Das Rohrelement 3 ist insofern als Gaszuführung 6 der Einrichtung 1 ausgebildet.

Wie weiterhin aus Figur 2 ersichtlich, weist die Einrichtung 1 weiterhin ein zweites Rohrelement 7 auf, das axial an dem Mischzylinder 2 und als Gemischabführung 8 ausgebildet ist. Dabei ist das Rohrelement 7 der der Stirnseite 4 gegenüberliegenden Stirnseite 9 des Mischzylinders 2 zugeordnet. An das Rohrelement 3 schließt sich ein Katalysator 10 an, auf dessen Funktion später näher eingegangen werden soll.

Die Einrichtung 1 weist weiterhin eine Einspritzeinrichtung 11 auf, die zum dosierten Einspritzen eines flüssigen Mediums, insbesondere von flüssigem Abgasnachbehandlungsmittel dient. Die Einspritzeinrichtung 11 ist dabei der Gaszuführung 6 zugeordnet und an dem Rohrelement 3 angeordnet, so dass durch die Einspritzeinrichtung 11 eingespritztes Medium in den durch das Rohrelement 3 geführten Gasstrom eingespritzt wird bevor dieser in den Mischzylinder 2 gelangt. Bevorzugt ist die Einspritzeinrichtung 11 derart ausgebildet oder ausgerichtet, dass das flüssige Medium in Richtung der in dem Mischzylinder erzeugten Drallströmung insbesondere in Richtung des Zentrums beziehungsweise der Mittelachse des Mischzylinders 2 eingespritzt wird, um eine vorteilhafte Vermischung mit dem Gasstrom zu erreichen. Während gemäß dem dargestellten Ausführungsbeispiel die Einspritzeinrichtung 11 dazu auf der Mittelachse des Mischzylinders 2 angewandten Seite des Rohrelementes 3 angeordnet ist, kann auch eine Anordnung der Dosiereinrichtung 11 auf der der Mittelachse des Mischzylinders 2 zugewandten Unterseite des Rohrelements 3 vorgesehen sein.

Figur 3 zeigt hierzu eine vereinfachte Schnittdarstellung der Einrichtung 1. Die Stirnseite 4 des Mischzylinders 2 weist eine geschlossene Wand auf, während die Stirnseite 9 offen ausgebildet ist. Das Rohrelement 7 ist dabei bevorzugt axial bereichsweise in dem Mischzylinder 2 durch die offene Stirnseite 9 eingeschoben, wobei das Rohrelement 8 und die Mantelwand 5 des Mischzylinders 2 dabei bevorzugt eine Presspassung bilden. Ein Verschweißen, Verschrauben oder das Vorsehen eines V-Bands oder einer Flanschverbindung sind alternativ oder zusätzlich denkbar. Das Rohrelement 3 mündet durch die bereits erwähnte Öffnung 12 in den Mischzylinder 2 tangential, so dass das einströmende Gas aufgrund der vorliegenden Kreiszylinderform des Mischzylinders 2 in eine Rotationsbewegung um die Zylinderachse des Mischzylinders 2 versetzt wird. Zumindest im Wesentlichen gegenüberliegend von der Öffnung 12 ist in dem Mischzylinder 2 ein optionales Luftleitelement 13 angeordnet, das kreiszylinderwandförmig ausgebildet und koaxial zu dem Mischzylinder 2 ausgerichtet ist. Das Luftleitelement 13 erstreckt sich dabei in etwa über 180° des Umfangs des Mischzylinders 2. Weiterhin ist das Luftleitelement 13 derart angeordnet, dass sein radialer Abstand zwischen der durch das Luftleitelement 13 gebildeten Mantelwand 14 und der Mantelwand 5 des Mischzylinders 2, der einen ringsegmentförmigen Luftspalt bildet, durch welchen der in den Mischzylinder 2 geleitete Gasstrom zumindest teilweise strömen kann. Das Luftleitelement 13 wird somit beidseitig von dem Gasstrom in dem Mischzylinder 2 beaufschlagt. Zweckmäßigerweise wird es durch ein oder mehrere Abstandshalter an der Mantelwand 5 des Mischzylinders 2 gehalten.

Weiterhin weist die Einrichtung 1 vorliegend eine optionale Blende 15 auf, die der Gemischabführung 8 vorgeschaltet ist. Die Blende 15 wird durch ein Kreisringelement gebildet, dessen Innendurchmesser im Verhältnis zum Innendurchmesser der Mantelwand 5 des Mischzylinders 2 klein gewählt ist. Die dadurch gebildete Blendenöffnung 16 der Blende 15 ist dabei zweckmäßigerweise koaxial zu dem Mischzylinder 2 angeordnet.

Im Betrieb der Einrichtung 1 wird das von einer Brennkraftmaschine erzeugte Abgas durch das Rohrelement 3 beziehungsweise die Gaszuführung 6 tangential in den Mischzylinder 2 geführt. Bevor der Gasstrom in den Mischzylinder 2 gelangt, wird diesem mittels der Einspritzeinrichtung 11 das flüssige Abgasnachbehandlungsmittel zugeführt, so dass das flüssige Abgasnachbehandlungsmittel durch den Gasstrom in den Mischzylinder 2 getragen wird. In dem Mischzylinder 2 treffen der Gasstrom sowie die gebildeten Tropfen des Abgasnachbehandlungsmittels, wie in der Schnittdarstellung von Figur 4 gezeigt, im Wesentlichen auf die Innenseite der Mantelwand 14 des Luftleitelements 13. Da dieses beidseitig vom Gasstrom durchströmt wird, ist es thermisch im Wesentlichen von der Mantelwand 5 des Mischzylinders 2 entkoppelt, so dass es einmal aufgeheizt eine hohe Temperatur beibehält, ohne Wärme schnell an die Mantelwand 5 des Mischzylinders 2 abzuführen. Dadurch verdampfen die auf das Luftleitelement 13 auftreffenden Tropfen besser und führen zu einer homogeneren Gemischbildung. Ein Großteil des eindosierten Abgasnachbehandlungsmittels ist bis zum Auftreffen auf das Luftleitelement 13 noch nicht verdampft. Beim Auftreffen zerplatzt ein Teil der verbliebenen Tropfen in kleinere Tropfen, der andere Teil bildet einen Wandfilm auf der Auftrefffläche, der anschließend verdampft. Die verbliebenen kleinen Tropfen folgen dem Gasstrom und verdampfen dabei nach kurzer Wegstrecke vollständig. Dadurch wird erreicht, dass keine flüssige Phase aus dem Mischzylinder 2 heraus in die Gemischabführung 8 gelangt.

Das beim Verdampfen gebildete Gasgemisch wird durch die Rotation der Strömung im Mischzylinder mit dem in den Mischzylinder 2 eintretenden Gasstrom sehr homogen vermischt. Durch den axialen Ausgang aus dem Mischzylinder durch die Blende 15, die einen geringeren Durchmesser, insbesondere signifikant geringeren Durchmesser als der Mischzylinder 2 aufweist, führt die homogene Gasmischung zur Gemischabführung 8 aus dem Mischungszylinder 2 zu dem stromabwärts liegenden Katalysator 10, in welchem bevorzugt eine selektive katalytische Reduktion erfolgt. Bei dem Abgasnachbehandlungsmittel handelt es sich dabei bevorzugt um eine wässrige Harnstofflösung, die in dem Katalysator 10 mit dem Abgas zur Reduzierung von Schadstoffen des Abgases, insbesondere zur NOx-Reduktion reagiert.

Ist das Luftleitelement 13 gemäß einem hier nicht dargestellten Ausführungsbeispiel nicht vorgesehen, so treffen die Tropfen des flüssigen Mediums nicht auf die Mantelwand des Luftleitelements 13, sondern auf die Mantelwand 5 des Mischzylinders 2, die gegebenenfalls eine niedrigere Temperatur aufweist. Dennoch wird durch die vorteilhafte Gasführung erreicht, dass die Flüssigkeit in dem Mischzylinder verdampft und sich mit dem Gasstrom vermischt, bevor das Gasgemisch den Mischzylinder 2 axial verlässt.

Die beschriebene vorteilhafte Einrichtung 1 macht den Bedarf eines Rohrstücks mit einer Mindestlänge von beispielsweise 400 mm bis 1000 mm zur Vermischung und Verdampfung eines flüssigen Mediums mit einem Gasstrom überflüssig. Die Verdampfung und Vermischung erfolgt vorliegend innerhalb des Mischzylinders 2 auf kurzer axialer Länge, was zu entsprechenden Bauraumvorteilen führt. Die Abmessungen des Mischzylinders 2 sind vom Gasmassenstrom und vom gewünschten Vermischungsgrad abhängig. Bei vergleichbaren Gasmassenströmen baut der Mischzylinder 2 signifikant kleiner als ein herkömmliches Rohrstück, das zur Vermischung notwendig wäre. Ein weiterer Vorteil der Einrichtung 1 besteht darin, dass der Mischzylinder 2 direkt in das Gehäuse eines nachfolgenden Substrats oder Katalysators eingegliedert werden kann. Durch den Einbau des optionalen Luftleitelements 13, das insbesondere als Innenblech ausgebildet ist, vermeidet die Einrichtung 1 das weitere Auftreffen von Tropfen auf kühle Außenwände beziehungsweise die kühle Mantelwand des Mischzylinders 2. Alle Tropfen treffen auf ein beidseitig umströmtes und dadurch permanent vom Gasstrom beheiztes Luftleitelement beziehungsweise -blech. Dies führt zu einer besseren Verdampfung der Tropfen. Durch die thermische Entkopplung des Luftleitelements 13 von der Mantelwand 5 wird bei der Eindosierung des flüssigen Abgasnachbehandlungsmittels das Risiko zur kristallinen Ablagerung verringert.

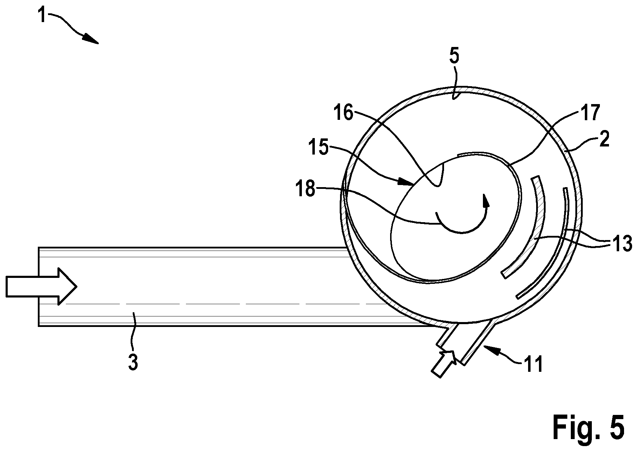

Figur 5 zeigt ein weiteres Ausführungsbeispiel der Einrichtung 1, wobei aus den vorhergehenden Figuren bereits bekannte Elemente mit den gleichen Bezugszeichen versehen sind. Es wird insofern auf die oben stehende Beschreibung verwiesen. Im Folgenden soll im Wesentlichen auf die Unterscheide eingegangen werden.

Figur 5 zeigt eine weitere Schnittansicht der Einrichtung 1, wobei nunmehr das kreiszylinderwandförmigeLuftleitelement 13 sich weniger weit über den Umfang des Mischzylinders 2 erstreckt, dafür aber in doppelter Ausführung radial beabstandet zueinander vorgesehen ist. Zusätzlich zu den Luftleitelementen 13 ist vorliegend ein weiteres Luftleitelement 17 vorgesehen, das sich spiralförmig von der Mantelwand 5 des Mischzylinders 2 nach innen bis zu der Blende 15 derart erstreckt, dass das durch das Rohrelement 3 einströmende Gas in eine Drallbewegung, wie durch einen Pfeil 18 angedeutet, versetzt und der Blende 15 beziehungsweise der Blendenöffnung 16 zugeführt wird.

Dadurch, dass das Gas zusammen mit dem eingespritzten Medium durch das Luftleitelement 17 in eine Drallbewegung gelenkt und der Blendenöffnung 16 zugeführt wird, erfolgt eine verbesserte Mischung von Gas und flüssigem Medium, wobei dadurch, dass das Luftleitelement 17 spiralförmig in Richtung der Blende 15 verläuft, Tropfen des Mediums an dem Luftleitelement 17 auftreffen und in kleinere Tröpfchen zerfallen, so dass eine optimale Vermischung erfolgt. Dadurch, dass das Luftleitelement 17 bis zu der Blende 15 führt, insbesondere derart, dass das Luftleitelement 17 zumindest bereichsweise bündig mit der Blendenöffnung 16 verläuft, wird erreicht, dass das Gas-Medium-Gemisch strömungsgünstig der Blende 15 zugeführt und aus der Einrichtung 1 herausgeführt wird.

Die Luftleitelemente 13 liegen radial zwischen dem Luftleitelement 17 und der Mantelwand 5 und unterstützen die Vermischung des Gases mit der Flüssigkeit. Insbesondere dienen die Luftleitelemente 13 als Aufprallplatten für das Medium, um große Tropfen in kleinere Tröpfchen aufzubrechen. Die Luftleitelemente 13 können dabei unterschiedliche Formen aufweisen, insbesondere abhängig von der Einspritzcharakteristik der Einspritzeinrichtung 11, um eine vorteilhafte Tröpfchenbildung zu erreichen. Sobald das Gasgemisch den Mischzylinder 2 verlassen hat, kann es einem stromabwärts liegenden Katalysator, insbesondere dem SCR-Katalysator 10 zugeführt werden. Aufgrund der vorteilhaften Ausbildung der Einrichtung 1 kann in diesem Fall der Katalysator 10 besonders nahe zu dem Mischzylinder 2 angeordnet werden, da bereits in dem Mischzylinder 2 eine besonders gute Vermischung von Gas und Medium beziehungsweise Abgasnachbehandlungsmittel erfolgt. Hierdurch ergibt sich eine kompakte Bauform für die Einrichtung 1 mit einer optimalen Vermischung von Gas und eingespritztem Medium. Durch den spiralförmigen Verlauf wird eine besonders lange Mischstrecke innerhalb des Mischzylinders 2 für die Zerstäubung des Mediums in dem Gas zur Verfügung gestellt, wobei nur ein geringer Gegendruck durch die Einrichtung 1 erzeugt wird. Die Blende 15 beziehungsweise Blendenöffnung 16 kann dabei unterschiedliche Querschnittsformen aufweisen. Sie kann, wie in Figur 5 dargestellt, eliptisch ausgebildet sein, oder, wie in Figur 4 dargestellt, eine kreisförmige Kontur aufweisen. Auch andere Blendenformen sind denkbar.

Gemäß einem alternativen Ausführungsbeispiel ist bevorzugt vorgesehen, dass der Mischzylinder 2 einen eckigen, insbesondere quadratischen Querschnitt zum Bilden einer eckigen beziehungsweise quaderförmigen Mischkammer aufweist, in welcher insbesondere das erste und/oder das zweite Luftleitelement 13, 17 wie zuvor beschrieben angeordnet sind.

## Patentansprüche

1. Einrichtung (1) zum Vermischen eines flüssigen Mediums mit einem Gasstrom, mit einer Gaszuführung (6), einem Mischzylinder (2), einer Einspritzeinrichtung (11) für das flüssige Medium und einer Gemischabführung (8), wobei die Gaszuführung (6) als tangential oder radial in den Mischzylinder (2) mündendes erstes Rohrelement (3) und die Gemischabführung (8) als axial aus dem Mischzylinder (2) herausführendes zweites Rohrelement (7) ausgebildet ist, wobei die Einspritzeinrichtung (11) derart angeordnet und/oder ausgebildet ist, dass das flüssige Medium radial oder tangential dem Mischzylinder (2) zugeführt wird, wobei der Gemischabführung (8) eine Blende (15) vorgeschaltet ist, die einen Blendendurchmesser aufweist, der kleiner als der Durchmesser des Mischzylinders (2) ausgebildet ist, und wobei in dem Mischzylinder (2) wenigstens ein Luftleitelement (17) angeordnet ist, das sich zumindest abschnittsweise spiralförmig erstreckt, **dadurch gekennzeichnet, dass** sich das Luftleitelement (17) von einer Mantelwand (5) des Mischzylinders (2) zumindest abschnittsweise spiralförmig zu der Blende (15) hin erstreckt.

2. Einrichtung nach Anspruch 1, **dadurch gekennzeichnet, dass** die Einspritzeinrichtung (11) der Gaszuführung (6) zugeordnet und derart ausgerichtet und/oder ausgebildet ist, dass sie das flüssige Medium in den Gasstrom vor Eintritt in den Mischzylinder (2) einspritzt.

3. Einrichtung nach einem der vorhergehenden Ansprüche, **dadurch gekennzeichnet, dass** die Einspritzeinrichtung (11) derart ausgebildet und/oder angeordnet ist, dass das flüssige Medium in Richtung einer in dem Mischzylinder (2) erzeugten Drallströmung des Gasstroms eingespritzt wird.

4. Einrichtung nach einem der vorhergehenden Ansprüche, **dadurch gekennzeichnet, dass** die Gaszuführung (6) einer ersten Stirnseite (4) des Mischzylinders (2) und die Gemischabführung (8) einer zweiten Stirnseite (9) des Mischzylinders (2) zugeordnet ist.

5. Einrichtung nach einem der vorhergehenden Ansprüche, **dadurch gekennzeichnet, dass** in dem Mischzylinder (2) wenigstens ein weiteres Luftleitelement (13) angeordnet ist, das zylinderwandförmig ausgebildet und koaxial in dem Mischzylinder (2) angeordnet ist.

6. Einrichtung nach Anspruch 5, **dadurch gekennzeichnet, dass** das weitere Luftleitelement (13) radial beabstandet zu einer Mantelwand (5) des Mischzylinders (2) angeordnet ist.

7. Einrichtung nach einem der Ansprüche 5 oder 6, **dadurch gekennzeichnet, dass** das mindestens eine weitere Luftleitelement (13) radial zwischen der Mantelwand (5) des Mischzylinders (2) und dem einen Luftleitelement (17) liegt.

8. Einrichtung nach einem der vorhergehenden Ansprüche, **gekennzeichnet durch** die Ausbildung als Abgasnachbehandlungseinrichtung, wobei die Gaszuführung (6) als Abgasrohr für eine Brennkraftmaschine ausgebildet ist, und die Einspritzeinrichtung (11) zum Einspritzen von flüssigem Abgasnachbehandlungsmittel.

9. Einrichtung nach Anspruch11, **dadurch gekennzeichnet, dass** die Gemischabführung (8) mit einem Katalysator (10) verbunden ist.

## Claims

1. Device (1) for mixing a liquid medium with a gas flow, having a gas inlet (6), having a mixing cylinder (2), having an injection device (11) for the liquid medium and having a mixture outlet (8), wherein the gas inlet (6) is in the form of a first pipe element (3) which opens tangentially or radially into the mixing cylinder (2), and the mixture outlet (8) is in the form of a second pipe element (7) which leads axially out of the mixing cylinder (2), wherein the injection device (11) is arranged and/or formed such that the liquid medium is supplied radially or tangentially to the mixing cylinder (2), wherein an aperture (15) is positioned upstream of the mixture outlet (8), which aperture has an aperture diameter formed so as to be smaller than the diameter of the mixing cylinder (2), and wherein, in the mixing cylinder (2), there is arranged at least one air-guiding element (17) which extends in spiral form at least in sections, **characterized in that** the air-guiding element (17) extends in spiral form at least in sections from a casing wall (5) of the mixing cylinder (2) to the aperture (15).

2. Device according to Claim 1, **characterized in that** the injection device (11) is assigned to the gas inlet (6) and is oriented and/or formed such that it injects the liquid medium into the gas flow before said gas flow enters the mixing cylinder (2).

3. Device according to one of the preceding claims, **characterized in that** the injection device (11) is formed and/or arranged such that the liquid medium is injected in the direction of a swirling flow, generated in the mixing cylinder (2), of the gas flow.

4. Device according to one of the preceding claims, **characterized in that** the gas inlet (6) is assigned to a first face side (4) of the mixing cylinder (2) and the mixture outlet (8) is assigned to a second face side (9) of the mixing cylinder (2).

5. Device according to one of the preceding claims, **characterized in that**, in the mixing cylinder (2), there is arranged at least one further air-guiding element (13) which is formed in the manner of a cylindrical wall and which is arranged coaxially in the mixing cylinder (2).

6. Device according to Claim 5, **characterized in that** the further air-guiding element (13) is arranged so as to be radially spaced apart from a casing wall (5) of the mixing cylinder (2).

7. Device according to either of Claims 5 and 6, **characterized in that** the at least one further air-guiding element (13) is situated radially between the casing wall (5) of the mixing cylinder (2) and the aforementioned air-guiding element (17).

8. Device according to one of the preceding claims, **characterized by** the embodiment as an exhaust-gas aftertreatment device, wherein the gas inlet (6) is in the form of an exhaust pipe for an internal combustion engine, and the injection device (11) is designed for injecting liquid exhaust gas aftertreatment agent.

9. Device according to Claim 1, **characterized in that** the mixture outlet (8) is connected to a catalytic converter (10).

## Revendications

1. Dispositif (1) pour mélanger un milieu fluide avec un courant gazeux, comprenant une alimentation en gaz (6), un cylindre de mélange (2), un dispositif d'injection (11) pour le milieu fluide et une évacuation de mélange (8), l'alimentation en gaz (6) étant réalisée sous forme de premier élément tubulaire (3) débouchant tangentiellement ou radialement dans le cylindre de mélange (2) et l'évacuation de mélange (8) étant réalisée sous forme de deuxième élément tubulaire (7) sortant du cylindre de mélange (2), le dispositif d'injection (11) étant disposé et/ou réalisé de telle sorte que le milieu fluide soit acheminé radialement ou tangentiellement au cylindre de mélange (2), un diaphragme (15) étant monté en amont de l'évacuation de mélange (8), lequel présente un diamètre de diaphragme qui est inférieur au diamètre du cylindre de mélange (2), et au moins un élément de guidage d'air (17) étant disposé dans le cylindre de mélange (2), lequel s'étend au moins en partie sous forme de spirale, **caractérisé en ce que** l'élément de guidage d'air (17) s'étend au moins en partie en spirale vers le diaphragme (15) depuis une paroi d'enveloppe (5) du cylindre de mélange (2).

2. Dispositif selon la revendication 1, **caractérisé en ce que** le dispositif d'injection (11) est associé à l'alimentation en gaz (6) et est orienté et/ou réalisé de telle sorte qu'il injecte le milieu fluide dans le courant de gaz avant l'entrée dans le cylindre de mélange (2).

3. Dispositif selon l'une quelconque des revendications précédentes, **caractérisé en ce que** le dispositif d'injection (11) est réalisé et/ou disposé de telle sorte que le milieu fluide soit injecté dans la direction d'un écoulement tourbillonnaire du courant de gaz généré dans le cylindre de mélange (2).

4. Dispositif selon l'une quelconque des revendications précédentes, **caractérisé en ce que** l'alimentation en gaz (6) est associée à un premier côté frontal (4) du cylindre de mélange (2) et l'évacuation de mélange (8) est associée à un deuxième côté frontal (9) du cylindre de mélange (2).

5. Dispositif selon l'une quelconque des revendications précédentes, **caractérisé en ce qu'**au moins un élément de guidage d'air supplémentaire (13) est disposé dans le cylindre de mélange (2), lequel est réalisé en forme de paroi de cylindre et est disposé coaxialement dans le cylindre de mélange (2).

6. Dispositif selon la revendication 5, **caractérisé en ce que** l'élément de guidage d'air supplémentaire (13) est disposé à distance radiale d'une paroi d'enveloppe (5) du cylindre de mélange (2).

7. Dispositif selon l'une quelconque des revendications 5 ou 6, **caractérisé en ce que** l'au moins un élément de guidage d'air supplémentaire (13) est situé radialement entre la paroi d'enveloppe (5) du cylindre de mélange (2) et ledit un élément de guidage d'air (17).

8. Dispositif selon l'une quelconque des revendications précédentes, **caractérisé par** la réalisation en tant que dispositif de post-traitement de gaz d'échappement, l'alimentation en gaz (6) étant réalisée sous forme de tuyau de gaz d'échappement pour un moteur à combustion interne, et le dispositif d'injection (11) étant prévu pour injecter un agent de post-traitement de gaz d'échappement fluide.

9. Dispositif selon la revendication 1, **caractérisé en ce que** l'évacuation de mélange (8) est connectée à un catalyseur (10).
